# EUROPEAN PATENT APPLICATION

(11) **EP 4 786 614 A1**
(43) Date of publication of application: **05.08.2026**
(21) Application number: 24885242.8
(22) Date of filing: 09.08.2024
(51) Int. Cl.: C22B 47/00, C21C 7/00, C22B 5/12

(54) **METHOD FOR PRODUCING MANGANESE CARBIDE AND METHOD FOR PRODUCING MANGANESE-CONTAINING STEEL**

(30) Priority: 02.11.2023 JP 2023188181; 22.02.2024 JP 2024025167
(71) Applicant: JFE Steel Corporation, Tokyo 100-0011 (JP)
(72) Inventor: YOSHIDA, Hironori, Tokyo 100-0011 (JP); NAKAI, Yoshie, Tokyo 100-0011 (JP)
(74) Representative: Grünecker Patent- und Rechtsanwälte PartG mbB
(86) International application number: PCT/JP2024/028623
(87) International publication number: WO 2025/094465

(57) **Abstract**

The present invention proposes a method for producing manganese carbide that can reduce the CO₂ emissions. In this method, a reduction treatment of manganese ore is performed by heating the manganese ore to a treatment temperature corresponding to an unmelted state and bringing the manganese ore into contact with a mixed gas of hydrogen gas and hydrocarbon gas under atmospheric pressure. It is preferable that the partial pressure of the hydrocarbon gas in the mixed gas be set to 10.0 kPa or higher, and that the number of hydrogen atoms in the mixed gas be set to at least 12 times that of the carbon atoms. It is preferable that the treatment temperature be set to be within a range of 800°C or higher and lower than a melting temperature Tₘ. It is preferable that the particle diameter of the manganese ore be adjusted to 3 mm or larger and 100 mm or smaller; that the treatment be performed in a rotary kiln; that the hydrocarbon gas be supplied at a position where the temperature inside the rotary kiln is 700°C or higher; etc. Also proposed is a method for producing manganese-containing steel that includes a step of adding the manganese carbide thus obtained to molten steel.

## Description

### Technical Field

The present invention relates to a method for producing manganese carbide by performing a reduction-carburization treatment on manganese ore and to a method for producing manganese-containing steel using the thus-produced manganese carbide.

### [Definition]

In this description, an abbreviated expression, such as "Mn" or "MnO₂" represents the substance of that chemical formula, and an unabbreviated expression, such as "manganese" represents manganese contained in that substance regardless of the form.

The unit of volume "L" in this description represents 10⁻³ m³, and the symbol "N" prefixed to the unit of volume of a gas represents a standard state of the gas. The standard state means a temperature of 0°C and an atmospheric pressure of 1 atm. The unit of pressure 1 atm is equal to 1.01325 × 10⁵ Pa. T. Mn (total Mn) in a substance indicates the total amount of the content percentage of manganese contained in that substance regardless of the form.

### Background Art

Manganese contained in steel has been added into molten steel in the steelmaking process to improve the toughness and wear resistance of the steel. Examples of manganese-containing substances added in the steelmaking process include metallic manganese, ferromanganese, and silicon manganese. Ferromanganese is generally produced by charging manganese ore, iron ore, and a reductant into a melting furnace and melting and reducing the manganese ore and the iron ore. As this method handles a high-temperature melt, it requires a transport container for housing and transporting the melt and a casting device for cooling and solidifying the melt. Thus, there is a concern that the size of the device may increase or that the ease of handling of a ferromanganese product may decrease. Another concern is that the product yield may decrease as the melt scatters or remains inside the melting furnace during a reduction treatment.

As for a technique of reducing manganese ore in a solid state as is, methods that perform a heating treatment using a reducing gas instead of a solid carbon-containing substance have been proposed, for example, as shown in Patent Literature 1 to Patent Literature 4.

### Citation List

### Patent Literature

Patent Literature 1: Japanese Patent Laid-Open No. 50-070202
Patent Literature 2: Japanese Patent Laid-Open No. 56-072150
Patent Literature 3: Japanese Patent Laid-Open No. 08-253308
Patent Literature 4: Japanese Patent Laid-Open No. 2023-140706

### Summary of Invention

### Technical Problem

However, each of the conventional technologies listed above has a problem to be solved as follows.

That is, the methods disclosed in Patent Literatures 1 and 2 can only produce manganese oxide (MnO) with a low degree of oxidation by partially reducing manganese oxide (MnO₂, Mn₂O₃, etc.) with a high degree of oxidation contained in manganese ore. To obtain a manganese alloy product, the product resulting from reduction needs to be further melted and reduced.

On the other hand, the melting-reduction treatment of manganese ore uses a solid carbon-containing substance, such as coke, as a reductant, and therefore a large amount of CO₂ is emitted in this treatment. From the viewpoint of recent efforts to cut greenhouse gases for the conservation of the global environment, it is necessary to reduce the amount of a solid carbon-containing substance used and to reduce the CO₂ emissions also in the production of manganese alloys.

However, the methods disclosed in Patent Literatures 1 and 2 cannot produce a manganese alloy product by using only a reducing gas, and require supplying a solid carbon-containing substance when further melting and reducing the product resulting from reduction. Thus, these methods are limited in terms of reducing the CO₂ emissions in the entire reduction treatment of ore.

The methods disclosed in Patent Literatures 3 and 4 can produce manganese carbide (Mn₇C₃, Mn₃C, etc.) by reducing manganese oxide with a high degree of oxidation that is contained in manganese ore. However, the method disclosed in Patent Literature 3 involves a step of finely pulverizing manganese ore to 1 mm or smaller. When the manganese ore is in the form of such powder or fine particles, there is a concern that the ease of handling may decrease or that the yield of manganese carbide obtained after the treatment may decrease. In the method disclosed in Patent Literature 4, while a preferable range for the particle diameter of manganese ore is not disclosed, if the manganese ore is in the form of powder or fine particles, there is the same concern that the ease of handling may decrease or the yield of manganese carbide obtained after the treatment may decrease. Conversely, if the particle diameter is too large, there is a concern that the reaction efficiency in the reduction-carburization treatment may decrease.

Further, although the reduction-carburization reaction of manganese ore is faster at higher temperatures, the method disclosed in Patent Literature 3 involves holding manganese ore at 250 to 520°C. As such, the reduction-carburization treatment of manganese ore takes as long as 48 hours, which results in a decrease in the production efficiency of manganese carbide.

To solve the above-described problems associated with the conventional technologies, an objective of the present invention is to provide a method for producing manganese carbide that enables an efficient reduction-carburization treatment of manganese in a relatively short time, without using a plurality of reduction treatment devices and without involving finely pulverizing the manganese ore, thereby reducing the CO₂ emissions. Further, the present invention provides a method of producing manganese-containing steel using the manganese carbide thus obtained.

### Solution to Problem

In the course of examining the above-described problems associated with the conventional technologies, the present inventors performed a reduction-carburization treatment of manganese ore by bringing manganese ore into contact with hydrogen gas and hydrocarbon gas at a treatment temperature at which manganese ore remains in an unmelted state, and thus completed the present invention.

Specifically, a method for producing manganese carbide according to the present invention that advantageously solves the above-described problems is characterized in that a reduction-carburization treatment of manganese ore is performed by heating the manganese ore to a treatment temperature at which the manganese ore remains in an unmelted state, and by bringing the manganese ore into contact with a mixed gas of hydrogen gas and hydrocarbon gas under atmospheric pressure.

The following can be some of more preferable embodiments of the method for producing manganese carbide according to the present invention:
a: the partial pressure of the hydrocarbon gas in the mixed gas is set to 10.0 kPa or higher, and the number of hydrogen atoms in the mixed gas is set to be at least 12 times that of carbon atoms;
b: the treatment temperature is set to be within a range of 800°C or higher and lower than a melting temperature Tₘ;
c: further, the particle diameter of the manganese ore is adjusted in advance to 3 mm or larger and 100 mm or smaller;
d: the reduction-carburization treatment is performed in a rotary kiln;
e: the mixed gas is supplied at a position where the temperature inside the rotary kiln is 700°C or higher;
f: at the position where the mixed gas is supplied, the partial pressure of the hydrocarbon gas in the mixed gas is set to 10.0 kPa or higher and the number of hydrogen atoms in the mixed gas is set to be at least 12 times that of carbon atoms; and
g: a maximum temperature inside the rotary kiln is set within a range of 800°C or higher and lower than a melting temperature Tₘ.

The melting temperature Tₘ refers to the temperature at which a solid specimen transitions into a liquid. While determining the melting temperature Tₘ by any of the following first to third methods is easy and preferable, the determination method is not limited thereto.
- The first method involves charging a solid specimen into a container, such as a crucible, and continuously observing the specimen in the container under a target gas atmosphere while increasing the temperature by 5°C per minute, desirably by 1°C or less per minute, using an electric resistance furnace or the like, thereby determining the melting point as the temperature at which gaps between particles of the solid specimen have disappeared and a smooth surface has formed on its surface.
- The second method involves increasing the temperature under a target gas atmosphere by 5°C per minute, desirably by 1°C or less per minute, and determining the melting point as the temperature of a minimum point of an endothermic peak thus measured by a differential thermal analysis. In this method, in the case where a plurality of endothermic peaks occurs, the measurement is stopped at a temperature at which each endothermic peak has occurred, and the external appearance of the specimen being measured is observed. The temperature of a minimum point of an endothermic peak that is the lowest temperature among the temperatures at which gaps among particles of the solid specimen have disappeared and a smooth surface has formed on its surface is determined as the melting point.
- The third method involves using thermodynamic calculation software of an electronic computer to input the composition of the specimen, calculate the liquid phase rate by varying the temperature, and determine the melting point as the temperature at which the calculated liquid phase rate exceeds 95%.

A method for producing manganese-containing steel according to the present invention that advantageously solves the above-described problems is characterized in that the method includes a step of adding manganese carbide produced by any of the above-described methods to molten steel.

### Advantageous Effects of Invention

The present invention enables an efficient reduction-carburization treatment of manganese ore in a relatively short time, without using a plurality of reduction treatment devices, without involving finely pulverizing the manganese ore, and without melting the manganese ore, when subjecting the manganese ore to the reduction-carburization treatment. Further, the present invention can reduce the CO₂ emissions during the reduction-carburization treatment.

### Description of Embodiments

In developing the present invention, the present inventors produced manganese carbide by charging manganese ore into a reaction container for performing a reduction-carburization treatment, and then performing a reduction-carburization treatment by maintaining the interior of the reaction container at a predetermined temperature while supplying a reductant. In this regard, manganese carbide refers to a manganese compound obtained by reducing manganese ore such that the manganese compound has an oxygen concentration of a predetermined value or less and contains carbon within a predetermined concentration range. For example, manganese carbide is preferably a manganese compound in which the oxygen (O) concentration is 6.0 mass% or lower and the carbon (C) concentration is 4.0 mass% or higher.

In this production process, the reduction behavior of manganese ore was studied by varying conditions including the type of reductant, its supply amount, and the supply method . As a result, it was determined that, by performing a reduction-carburization treatment using hydrogen gas and hydrocarbon gas as the reductant and without melting the manganese ore, the reduction-carburization treatment could be easily performed without using a plurality of reduction treatment devices. It was further found that the CO₂ emissions during the reduction-carburization treatment could thereby be reduced. The details are as follows.

First, in a manganese ore reduction method according to the present invention, it is necessary to use a mixed gas of hydrogen gas and hydrocarbon gas as the reductant. Mn in manganese ore is present mainly in the form of MnO₂. Therefore, when using only hydrogen gas, MnO₂ is reduced only to MnO as represented by Formulae (1) to (3) shown in Chemical Formula 1 below. It is thermodynamically difficult to reduce manganese ore to metallic manganese using only hydrogen gas.
[Formula 1]

2MnO₂(s) + H₂(g) = Mn₂O₃(s) + H₂O(g) ··· (1)

3Mn₂O₃(s) + H₂(g) = 2Mn₃O₄(s) + H₂O(g) ··· (2)

Mn₃O₄(s) + H₂(g) = 3MnO(s) + H₂O(g) ··· (3)

On the other hand, when hydrocarbon gas such as methane or propane is used, the hydrocarbon gas partially decomposes at a high temperature, generating highly reactive carbon and hydrogen gases. Therefore, in addition to the reactions represented by Formulae (1) to (3) above, for example, a carburization reaction from MnO to manganese carbide, such as Mn₇C₃, proceeds as shown in Formula (4) of Chemical Formula 2 below.

[Formula 2] 7MnO(s) + 10CH₄(g) = Mn₇C₃(s) + 7CO(g) + 20H₂(g) ··· (4)

However, when the highly reactive carbon generated as a result of decomposition of the hydrocarbon gas is consumed by reduction in the reaction from MnO₂ to MnO, a large amount of CO₂ is emitted as in conventional melting-reduction treatments using a solid carbon-containing substance. Further, as a supply of carbon needed for the carburization reaction from MnO to Mn₇C₃ etc. becomes insufficient, it is necessary to excessively supply hydrocarbon gas. This may cause a decrease in the reduction efficiency and an increase in the reductant cost. Therefore, it was considered that by using a mixed gas of hydrogen gas and hydrocarbon gas as the reductant, it would be possible to perform a reduction treatment from MnO₂ to MnO using mainly hydrogen gas and perform a carburization treatment of MnO while minimizing the supply amount of the hydrocarbon gas.

In the reduction-carburization treatment, it is necessary for the manganese ore to react at a treatment temperature at which it remains in an unmelted state. As described above, problems in melting and reducing manganese ore include an increase in the size, and a decrease in the ease of handling, of a reduction treatment device. On the other hand, it is possible to simplify the reduction treatment device and improve the ease of handling thereof by performing the reduction-carburization treatment using a gas redundant, without melting the manganese ore so as to secure gas permeability.

The composition of the mixed gas of hydrogen gas and hydrocarbon gas to be brought into contact with manganese ore is preferably within the following range. First, the partial pressure of the hydrocarbon gas in the mixed gas should be 10.0 kPa or higher. In addition, to promote the carburization reaction of MnO, it is effective to reduce the oxygen partial pressure in the atmosphere. For example, if the partial pressure of the hydrocarbon gas in the mixed gas to be supplied is lower than 10.0 kPa when the temperature of the manganese ore is 1100°C, the oxygen partial pressure required to promote the carburization reaction of MnO is 1.0 × 10⁻¹⁷ kPa or lower. It is difficult to keep the oxygen partial pressure in the atmosphere at as extremely low a level as that. There is no upper limit on the partial pressure of the hydrocarbon gas in the mixed gas to be supplied. However, as described above, the larger the value of the upper limit is, the more likely it is that the hydrocarbon gas may be excessively supplied; therefore, the upper limit is more preferably 50.0 kPa or lower. Further, the number of hydrogen atoms in the mixed gas should be at least 12 times that of carbon atoms. When the number of hydrogen atoms in the mixed gas to be brought into contact with the manganese ore is less than 12 times that of carbon atoms, the hydrogen gas concentration in the mixed gas may be too low. Thus, as described above, the proportion of the hydrocarbon gas that is consumed by the reduction reaction from MnO₂ to MnO increases, which may lead to an increase in the CO₂ emissions. Although there is no upper limit on the ratio of hydrogen atoms to carbon atoms in the mixed gas, the larger the value of the upper limit is, the lower the proportion of the hydrocarbon gas in the mixed gas becomes, which may impede the progress of the carburization reaction of MnO. Therefore, the number of hydrogen atoms in the mixed gas is more preferably 22 times or less that of carbon atoms.

As for the treatment temperature of the reduction-carburization treatment, it is preferable that the manganese ore be heated to a temperature of 800°C or higher and below a melting temperature Tₘ. The definition of the melting temperatureTₘ is preferably according to the first to third methods described above. Patent Literature 3 discloses 1870°C as the temperature at which carburization of MnO by a mixed gas of hydrogen gas and methane gas begins. However, as a result of repeatedly conducting a reduction-carburization treatment of manganese ore using hydrogen gas and hydrocarbon gas, the present inventors discovered that manganese carbide could be obtained also at lower temperatures than 1870°C. In the manganese ore reduction method according to the present invention, the carburization reaction of MnO by hydrocarbon gas begins at approximately 750°C. The higher the treatment temperature is, the more the reduction reaction of MnO₂ and the carburization reaction of MnO are promoted. Therefore, the treatment temperature is more preferably 1100°C or higher. When the treatment temperature is not lower than the melting temperature Tₘ of the manganese ore, the gas permeability decreases due to melting, which may hinder the reduction-carburization reaction. From the perspective of energy conservation, the treatment temperature of the reduction-carburization treatment is more preferably 1200°C or lower.

It is preferable that manganese carbide obtained by the above-described method be added into molten steel in one of steps of a molten steel production process. As described above, ferromanganese is used in a steelmaking step of a molten steel production process. Ferromanganese is classified according to the carbon content into high-carbon, medium-carbon, low-carbon, ultralow-carbon ferromanganese etc., and a suitable type of ferromanganese is used according to the component standard or the production process of steel. Of these types, high-carbon ferromanganese contains about 7 mass% C, and C in ferromanganese is present in the form of manganese carbide, such as Mn₇C₃ or Mn₅C₂. Manganese carbide obtained by the method for producing manganese carbide according to the present invention mainly contains Mn₇C₃ and Mn₅C₂. Like high-carbon ferromanganese, the manganese carbide complying with the present invention can be used as a manganese source in primary refining and secondary refining of molten steel. On the other hand, in the method for producing manganese carbide that complies with the present invention, it is difficult to separate and remove gangue components (oxides such as Si and Al) contained in manganese ore. Accordingly, the obtained manganese carbide contains such gangue components. However, when the manganese carbide obtained by the above-described method is added into molten steel, Mn₇C₃ and Mn₅C₂ dissolve quickly into the molten steel and the gangue components transfer into steelmaking slag, so that the Mn concentration can be increased without increasing impurity elements in the molten steel.

Next, a specific example is given of a reduction-carburization treatment of manganese ore, based on the method for producing manganese carbide according to the present invention. Examples of the composition of manganese ore to be used are shown in Table 1.

**[Table 1]**

| | Chemical composition [mass%] | | | | |
|---|---|---|---|---|---|
| | T.Mn | T.Fe | SiO₂ | Al₂O₃ | Moisture |
| Manganese ore A | 51.2 to 55.8 | 2.9 to 4.4 | 3.0 to 4.6 | 2.7 to 5.2 | 3.2 to 5.1 |
| Manganese ore B | 50.3 to 54.7 | 2.5 to 3.9 | 3.1 to 4.4 | 3.0 to 4.9 | 2.6 to 4.5 |

| | | | | | |
|---|---|---|---|---|---|
| T. Mn: total Mn, T. Fe: total Fe | | | | | |

Manganese ore as a raw material is charged into a reaction container for performing a reduction-carburization treatment. The type of the reaction container is not particularly limited, and a continuous reaction container, such as a blast furnace, or a batch-type reaction container, such as a rotary kiln, can be adopted. While the particle diameter of the manganese ore is not particularly limited, it is preferably 3 mm or larger because of a concern that manganese ore in the form of powder or fine particles may lead to a decrease in the addition yield or a decrease in the ease of handling. The particle diameter is preferably 100 mm or smaller because of a concern that an excessively large particle diameter may lead to a decrease in the reaction efficiency in the reduction-carburization treatment.

The properties of the manganese ore are not particularly limited. Hydrogen gas and hydrocarbon gas as reducing gases are supplied into the reaction container, and the supply amounts of the respective gases are controlled to achieve a predetermined gas composition inside the reaction container. The gas supply method is not particularly limited, and a mixed gas of hydrogen gas and hydrocarbon gas may be used, or hydrogen gas and hydrocarbon gas may be supplied through blow-in ports that are independent of each other. Alternatively, a method of blowing in a reducing gas through a tuyere installed in a bottom surface or a side surface of the reaction container, or a method of spraying a reducing gas using a lance from above the layer of the manganese ore packed in the reaction container can be adopted. Subsequently, the inside of the reaction container is heated so as to reach a predetermined treatment temperature within a range in which the manganese ore does not melt. The method for heating the manganese ore and the reaction container is not particularly limited, and burner heating, electric resistance heating, induction heating, etc. can be employed. By being subjected to the reduction-carburization treatment through the above-described steps, the manganese ore is converted into a manganese carbide product. While applications of the manganese carbide product are not restricted, for example, it can be added to molten steel as a manganese source in a molten steel production process.

In the method for producing manganese-containing steel, the Mn concentration in molten steel can be adjusted by adding the manganese carbide, for example, during ladle refining after the steel is discharged from a converter, for example, during arc heating or a vacuum degassing treatment. In this case, it is preferable that the C concentration having been increased by the addition of the manganese carbide be adjusted by supplying oxygen and performing a decarburization treatment during the vacuum degassing treatment. The molten steel of which the component composition has been adjusted can be formed into cast slabs by continuous casting, etc. and subjected to hot rolling, a heat treatment, cold rolling, an annealing treatment, and a surface treatment such as plating as necessary to produce manganese-containing steel.

### Examples

### <Example 1>

An example is described in which a reduction-carburization treatment of manganese ore A in Table 1 was performed using a 10 kg-scale electric resistance furnace. After the temperature inside the electric resistance furnace was raised to a predetermined temperature by adjusting the output of the electric resistance furnace, 10 kg of a specimen of manganese ore A with a particle diameter of 1 to 5 mm was charged into the electric resistance furnace. Various conditions are shown in Table 2. The T. Mn concentration in manganese ore A before the reduction-carburization treatment was 51.2 to 55.8 mass%. The T. Mn concentration is a total manganese concentration in manganese ore. Next, in accordance with the specifications of treatment Nos. 1 to 10 and 16, a specimen of manganese ore A with a particle diameter of 5 mm was used, and a mixed gas of hydrogen (H₂) gas and methane (CH₄) gas was supplied at a flow rate of 30 NL/min through a plurality of tuyeres installed in the side surface of the reaction container. Thereafter, the specimen was held for a predetermined time and subjected to a reduction-carburization treatment. Here, the reduction-carburization treatment was performed with the composition of the supply gas and the temperature inside the electric resistance furnace changed variously. In accordance with the specifications of treatment Nos. 11 and 12, specimens of manganese ore A with particle diameters of 1 mm and 3 mm, respectively, were used and the reduction-carburization treatment was performed in the same manner. In this case, as a pre-treatment, a specimen of manganese ore A with a particle diameter of 5 mm was pulverized by a roll crusher to produce specimens of manganese ore A with particle diameters of 1 mm and 3 mm. In accordance with some specifications, as comparative examples, a specimen of manganese ore with a particle diameter of 5 mm was used, and only hydrogen gas (treatment No. 13) or only methane gas (treatment No. 14) was supplied. In treatment No. 15, the reduction-carburization treatment was performed using coke as a solid carbon-containing substance. In the case where coke was used, the amount of coke charged was 5 kg, and an Ar gas was supplied at a flow rate of 30 NL/min through a tuyere installed in the side surface of the reaction container. In treatment No. 16, as a comparative example, a specimen of manganese ore A with a particle diameter of 5 mm was used, and a reduction-carburization treatment was performed by using a mixed gas of hydrogen gas and methane gas and keeping the temperature inside the electric resistance furnace at 1300°C. A gas chromatograph analysis device was installed at a part of a gas exhaust system of the electric resistance furnace, and the CO concentration and the CO₂ concentration in a gas discharged to the outside of the electric resistance furnace were measured.

After the predetermined time passed, the manganese ore specimen was taken out of the electric resistance furnace and cooled in the air. The oxygen concentration and the carbon concentration in the specimen were analyzed by a combustion method, and the concentrations of elements other than oxygen and carbon in the specimen were analyzed by a fluorescent X-ray analysis method, to examine the reduced state of the specimen. The reduction-carburization treatment conditions of manganese ore and the reduction ratio of manganese ore are shown in Table 2. Here, the reduction ratio of manganese ore in Table 2 represents a difference between the oxygen concentration of the manganese oxides in the manganese ore before the reduction-carburization treatment and the oxygen concentration of the manganese oxides in the manganese compound after the reduction-carburization treatment as a percentage of a ratio to the oxygen concentration of the manganese oxides in the manganese ore before the reduction-carburization treatment. The oxygen concentration of the manganese oxides in the manganese ore is a difference between an analysis value of the oxygen concentration in the entire manganese ore specimen and the total calculated value of the oxygen concentrations of oxides other than manganese in the manganese ore. The CO₂ concentration in the exhaust gas in Table 2 is a total of an average value of CO₂ concentrations measured during the reduction-carburization treatment and an average value of values obtained by converting the CO concentration measured during the reduction-carburization treatment into a CO₂ concentration. In Table 2, among the columns of "Supply gas", "H₂" represents the hydrogen gas concentration; "CH₄" represents the hydrocarbon gas concentration; "P_{CH4}" represents the partial pressure of the hydrocarbon gas; and "H/C" represents the ratio of the number of hydrogen atoms in the mixed gas to that of carbon atoms. Among the columns of "Mn compound composition before treatment" and "Mn compound composition after treatment, "T. Mn" represents the total manganese concentration; "O" represents the oxygen concentration, and "C" represents the carbon concentration. "Tr" represents the treatment temperature of the reduction-carburization treatment, and "tr" represents the treatment time of the reduction-carburization treatment. Further, "d" represents the particle diameter of the manganese ore specimen, and "tb" represents the treatment time of the pre-treatment of the manganese ore specimen, i.e., the treatment time taken to produce the manganese ore specimens with particle diameters of 1 mm and 3 mm.

**[Table 2]**

| No. | Type of reducta nt | Supply gas | | | | Tr | tr | d | tb | Mn compound composition before treatment | | | Mn compound composition after treatment | | | Reducti on ratio | Melting of specimen | CO₂ conc. in exhaust gas | Remarks |
|---|---|---|---|---|---|---|---|---|---|---|---|---|---|---|---|---|---|---|---|
| | | H₂ | CH₄ | P_{CH4} | H/C | | | | | T.Mn | O | C | T.Mn | O | C | | | | |
| | | Vol% | Vol% | kPa | - | °C | min | mm | min | Mass% | Mass% | Mass% | Mass% | Mass% | Mass% | % | - | Vol% | |
| 1 | H₂, CH₄ | 95 | 5 | 5.1 | 42 | 900 | 180 | 5 | 0 | 51.2 | 23.9 | 0.1 | 66.0 | 5.8 | 4.0 | 81.1 | Not melted | 0.5 | Inventive Example |
| 2 | H₂, CH₄ | 92 | 8 | 8.1 | 27 | 900 | 180 | 5 | 0 | 52.6 | 24.5 | 0.1 | 68.5 | 5.6 | 5.4 | 82.5 | Not melted | 0.7 | Inventive Example |
| 3 | H₂, CH₄ | 90 | 10 | 10.1 | 22 | 900 | 180 | 5 | 0 | 53.1 | 24.7 | 0.1 | 70.3 | 4.1 | 5.9 | 87.5 | Not melted | 1.1 | Inventive Example |
| 4 | H₂, CH₄ | 80 | 20 | 20.3 | 12 | 900 | 180 | 5 | 0 | 51.4 | 24.0 | 0.1 | 67.5 | 3.7 | 6.6 | 88.3 | Not melted | 1.6 | Inventive Example |
| 5 | H₂, CH₄ | 75 | 25 | 25.3 | 10 | 900 | 180 | 5 | 0 | 55.8 | 26.0 | 0.1 | 74.5 | 5.3 | 7.1 | 84.6 | Not melted | 2.1 | Inventive Example |
| 6 | H₂, CH₄ | 80 | 20 | 20.3 | 12 | 750 | 180 | 5 | 0 | 54.1 | 25.2 | 0.1 | 70.6 | 6.5 | 4.9 | 80.2 | Not melted | 1.0 | Inventive Example |
| 7 | H₂, CH₄ | 80 | 20 | 20.3 | 12 | 800 | 180 | 5 | 0 | 53.6 | 25.0 | 0.1 | 70.9 | 4.6 | 6.1 | 86.0 | Not melted | 1.5 | Inventive Example |
| 8 | H₂, CH₄ | 80 | 20 | 20.3 | 12 | 1000 | 180 | 5 | 0 | 55.0 | 25.6 | 0.1 | 74.2 | 3.4 | 6.3 | 90.2 | Not melted | 1.7 | Inventive Example |
| 9 | H₂, CH₄ | 80 | 20 | 20.3 | 12 | 1100 | 180 | 5 | 0 | 54.3 | 25.3 | 0.1 | 73.7 | 2.0 | 6.5 | 94.1 | Not melted | 1.9 | Inventive Example |
| 10 | H₂, CH₄ | 80 | 20 | 20.3 | 12 | 1200 | 180 | 5 | 0 | 53.8 | 25.1 | 0.1 | 73.2 | 1.4 | 6.8 | 96.0 | Not melted | 1.9 | Inventive Example |
| 11 | H₂, CH₄ | 80 | 20 | 20.3 | 12 | 900 | 180 | 1 | 30 | 52.7 | 24.6 | 0.1 | 70.4 | 2.7 | 6.6 | 91.9 | Not melted | 1.5 | Inventive Example |
| 12 | H₂, CH₄ | 80 | 20 | 20.3 | 12 | 900 | 180 | 3 | 10 | 54.0 | 25.2 | 0.1 | 72.4 | 3.4 | 6.3 | 90.1 | Not melted | 1.8 | Inventive Example |
| 13 | H₂ | 100 | 0 | 0 | - | 900 | 180 | 5 | 0 | 53.3 | 24.8 | 0.1 | 62.7 | 17.7 | 0.1 | 39.6 | Not melted | <0.1 | Comparative Example |
| 14 | CH₄ | 0 | 100 | 101.3 | 4 | 900 | 180 | 5 | 0 | 52.2 | 24.3 | 0.1 | 64.0 | 12.3 | 1.1 | 58.9 | Not melted | 18.4 | Comparative Example |
| 15 | Coke | 0 | 0 | 0 | - | 900 | 180 | 5 | 0 | 54.7 | 25.5 | 0.1 | 64.9 | 17.8 | 3.0 | 41.1 | Not melted | 25.3 | Comparative Example |
| 16 | H₂, CH₄ | 95 | 5 | 5.1 | 42 | 1300 | 180 | 5 | 0 | 52.4 | 24.4 | 0.1 | 65.7 | 10.0 | 3.2 | 67.2 | Melted | 0.5 | Comparative Example |

It was confirmed from the results that the results shown in Table 2 that, in treatment Nos. 1 to 12, in which the reduction-carburization treatment of the manganese ore was performed by the method according to the present invention, manganese carbide with a reduction ratio of the manganese ore of 80% or higher could be obtained. In contrast, in the case of the reduction treatment using only hydrogen gas (treatment No. 13) or the reduction-carburization treatment using only hydrocarbon gas (treatment No. 14) or using coke (treatment No. 15), the reduction ratio of the manganese ore was lower than 60%. Further, in treatment Nos. 1 to 12, compared with treatment Nos. 14 and 15, the CO₂ concentration in the exhaust gas in the reduction-carburization treatment was at a lower level. In treatment No. 16, in which the temperature inside the electric resistance furnace was kept at 1300°C, partial melting of the manganese ore specimen was observed during the reduction-carburization treatment, and it was found that the reduction ratio of the manganese ore was at a lower level compared with those in treatment Nos. 1 to 12. This is presumably due to the reduced gas permeability.

It was demonstrated from the results shown in Table 2 that, among the cases where the particle diameter of the manganese ore specimen was 5 mm and the treatment temperature was the same temperature of 900°C, treatment Nos. 3 and 4 achieved the reduction ratios of the manganese ore of 87% or higher, which were better than those in treatment Nos. 1, 2, and 5. In treatment Nos. 3 and 4, the partial pressure of the hydrocarbon gas in the mixed gas was 10.0 kPa or higher, and the number of hydrogen atoms in the mixed gas was at least 12 times that of carbon atoms. Treatment Nos. 1, 2 and 5 do not satisfy either of these conditions. In treatment No. 5, the ratio of the number of hydrogen atoms in the mixed gas to that of carbon atoms was so low that the CO₂ concentration in the exhaust gas increased compared with that in treatment Nos. 3 and 4.

It was confirmed from the results shown in Table 2 that, in treatment Nos. 4 and 6 to 10, in which the particle diameter of the manganese ore specimen was 5 mm and the partial pressure of hydrocarbon was the same, the higher the reduction-carburization treatment temperature was, the higher the reduction ratio of the manganese ore became. When the reduction-carburization treatment temperature was 800°C or higher, the reduction ratio of the manganese ore was 86% or higher, and when the temperature was 1100°C or higher, the reduction ratio of the manganese ore was 94% or higher.

It was demonstrated from the results shown in Table 2 that, in treatment Nos. 4, 11 and 12, in which the partial pressure of hydrocarbon was the same and the treatment temperature was the same temperature of 900°C, the smaller the particle diameter of the manganese ore specimen was, the higher the reduction ratio of the manganese ore was. However, the smaller the particle diameter of the manganese ore specimen was, the longer the pretreatment time of the manganese ore was. In treatment No. 4, 10 kg of a manganese ore specimen with a particle diameter of 5 mm was prepared and could be fed as is. On the other hand, in treatment Nos. 11 and 12, when pulverizing the manganese ore specimen, powder with a particle diameter smaller than a predetermined size was generated. Therefore, to secure the recovery amount, 15 kg and 13 kg of a manganese ore specimen with a particle diameter of 5 mm were prepared, respectively.

### <Example 2>

An example is described in which manganese-containing molten steel was produced in a 50 kg-scale induction melting furnace using manganese carbide obtained in accordance with the specifications of treatment Nos. 1 to 12 in Example 1. After 50 kg of high-purity electrolytic iron was charged into the induction melting furnace, the high-purity electrolytic iron inside the induction melting furnace was melted by adjusting the output of the induction melting furnace. With the temperature of the molten steel inside the induction melting furnace kept at 1600 to 1620°C, manganese carbide obtained in accordance with the specifications of treatment Nos. 1 to 12 in Example 1 was added to the molten steel to produce manganese-containing molten steel. As a reference example, high-carbon ferromanganese was added (treatment No. 17) to produce manganese-containing molten steel. Here, the amounts of manganese carbide and high-carbon ferromanganese to be added were determined such that the Mn concentration in the molten steel became 1.00 mass%. The compositions of manganese carbide and high-carbon ferromanganese are shown in Table 3. Further, the compositions of molten steel before and after the addition of manganese carbide or high-carbon ferromanganese are shown in Table 3.

Approximately three minutes after adding the manganese carbide or the high-carbon ferromanganese to the molten steel, the molten steel was taken from the induction melting furnace and water-cooled to produce a steel specimen. The carbon concentration in the specimen was analyzed by a combustion method, and the concentrations of elements other than carbon were analyzed by an ICP emission spectrometric analysis method to examine the composition of the specimen.

**[Table 3]**

| No. | Name of additive | Composition of additive [mass%] | | | | | Amount of Mn compound added [kg] | Molten steel composition before addition [mass%] | | | | Molten steel composition after addition [mass%] | | | | Remarks |
|---|---|---|---|---|---|---|---|---|---|---|---|---|---|---|---|---|
| | | T.Mn | T.Fe | C | Si | T.Al | | Mn | C | Si | sol.Al | Mn | C | Si | sol.Al | |
| 1 | Manganese carbide | 66.0 | 6.5 | 4.0 | 2.24 | 4.34 | 0.80 | 0.02 | 0.001 | <0.01 | <0.01 | 0.94 | 0.060 | <0.01 | <0.01 | Inventive Example |
| 2 | Manganese carbide | 68.5 | 6.1 | 5.4 | 1.96 | 4.18 | 0.75 | 0.02 | 0.001 | <0.01 | <0.01 | 0.93 | 0.077 | <0.01 | <0.01 | Inventive Example |
| 3 | Manganese carbide | 70.3 | 5.9 | 5.9 | 2.06 | 4.08 | 0.75 | 0.01 | 0.002 | <0.01 | <0.01 | 0.95 | 0.080 | <0.01 | <0.01 | Inventive Example |
| 4 | Manganese carbide | 67.5 | 6.2 | 6.6 | 2.34 | 3.92 | 0.75 | 0.01 | 0.001 | <0.01 | <0.01 | 0.92 | 0.085 | <0.01 | <0.01 | Inventive Example |
| 5 | Manganese carbide | 74.5 | 6.0 | 7.1 | 2.29 | 4.29 | 0.70 | 0.02 | 0.001 | <0.01 | <0.01 | 0.96 | 0.092 | <0.01 | <0.01 | Inventive Example |
| 6 | Manganese carbide | 70.6 | 5.9 | 4.9 | 2.24 | 4.08 | 0.70 | 0.02 | 0.001 | <0.01 | <0.01 | 0.94 | 0.080 | <0.01 | <0.01 | Inventive Example |
| 7 | Manganese carbide | 70.9 | 5.5 | 6.1 | 2.15 | 3.86 | 0.70 | 0.02 | 0.002 | <0.01 | <0.01 | 0.93 | 0.082 | <0.01 | <0.01 | Inventive Example |
| 8 | Manganese carbide | 74.2 | 5.6 | 6.3 | 2.29 | 4.02 | 0.70 | 0.02 | 0.002 | <0.01 | <0.01 | 0.96 | 0.081 | <0.01 | <0.01 | Inventive Example |
| 9 | Manganese carbide | 73.7 | 5.5 | 6.5 | 2.06 | 4.18 | 0.70 | 0.02 | 0.003 | <0.01 | <0.01 | 0.97 | 0.088 | <0.01 | <0.01 | Inventive Example |
| 10 | Manganese carbide | 73.2 | 6.0 | 6.8 | 2.15 | 4.08 | 0.70 | 0.01 | 0.002 | <0.01 | <0.01 | 0.93 | 0.091 | <0.01 | <0.01 | Inventive Example |
| 11 | Manganese carbide | 70.4 | 5.8 | 6.6 | 1.96 | 4.23 | 0.70 | 0.01 | 0.002 | <0.01 | <0.01 | 0.94 | 0.090 | <0.01 | <0.01 | Inventive Example |
| 12 | Manganese carbide | 72.4 | 5.7 | 6.3 | 2.01 | 4.18 | 0.70 | 0.01 | 0.001 | <0.01 | <0.01 | 0.95 | 0.084 | <0.01 | <0.01 | Inventive Example |
| 17 | HC-FeMn * | 74.8 | 17.2 | 7.2 | 0.16 | <0.01 | 0.70 | 0.02 | 0.002 | <0.01 | <0.01 | 0.95 | 0.095 | <0.01 | <0.01 | Reference Example |

| | | | | | | | | | | | | | | | | |
|---|---|---|---|---|---|---|---|---|---|---|---|---|---|---|---|---|
| *: High-carbon ferromanganese | | | | | | | | | | | | | | | | |

As shown in Table 3, in treatment Nos. 1 to 12, a reduction-carburization treatment of the manganese ore was performed by the method according to the present invention, and manganese-containing molten steel was produced using the manganese carbide thus obtained. As a result, it was confirmed that, in treatment Nos. 1 to 12, the molten steel had an Mn concentration of 0.92 to 0.97 mass% and a C concentration of 0.060 to 0.092 mass%. It was also confirmed that, in treatment Nos. 1 to 12, the molten steel had an Si concentration and a sol. Al concentration both lower than 0.01 mass%, and that Si and Al contained in the manganese carbide could be separated and removed as slag without being picked up into the molten steel. On the other hand, in treatment No. 17, in which manganese-containing molten steel was produced using high-carbon ferromanganese, the molten steel had an Mn concentration of 0.95 mass%, a C concentration of 0.095 mass%, and an Si concentration and a sol. Al concentration both lower than 0.01 mass%. Thus, it was confirmed that the composition was equivalent to that of the manganese-containing molten steel produced by the method according to the present invention.

### <Example 3>

An example is described in which a reduction-carburization treatment of manganese ore B in Table 1 was performed using a rotary kiln with a 100 kg/hr-scale treatment capacity. After the temperature inside the rotary kiln was raised using a propane gas burner such that the maximum temperature reached a predetermined temperature, 100 kg of a specimen of manganese ore B with a particle diameter of 1 to 120 mm was charged into the rotary kiln. Various conditions are shown in Table 4-1. The flow rate of propane gas for the burner was 20 NL/min, and the flow rate of oxygen gas for the burner was 100 NL/min. The T. Mn concentration in manganese ore B before the reduction-carburization treatment was 50.3 to 54.7 mass%. The T. Mn concentration is a total manganese concentration in manganese ore. Next, in accordance with the specifications of treatment Nos. 21 to 31 and 35 to 37, a lance was inserted to a predetermined position inside the rotary kiln, and a mixed gas of hydrogen gas (H₂) and methane gas (CH₄) was supplied at a flow rate of 2000 NL/min using the lance. Thereafter, the specimen was held for a predetermined time and subjected to a reduction-carburization treatment. In this case, the reduction-carburization treatment was performed with the particle diameter of the manganese ore, the lance insertion position, the composition of the supply gas, and the maximum temperature inside the rotary kiln varied. In accordance with some specifications, as comparative examples, a manganese ore specimen with a particle diameter of 10 mm was used, and the lance was inserted to a position at which the temperature inside the rotary kiln was 650°C, and only hydrogen gas (treatment No. 32) or only methane gas (treatment No. 33) was supplied. In treatment No. 34, a reduction-carburization treatment was performed using coke as a solid carbon-containing substance. In the case where coke was used, the amount of coke charged was 25 kg, and the lance was inserted to a position at which the temperature inside the rotary kiln was 650°C, and Ar gas was supplied at a flow rate of 2000 NL/min using the lance. Further, in treatment No. 37, as a comparative example, a manganese ore specimen with a particle diameter of 10 mm was used, and the lance was inserted to a position at which the temperature inside the rotary kiln was 650°C, and a reduction-carburization treatment was performed by using a mixed gas of hydrogen gas and methane gas and maintaining the maximum temperature inside the rotary kiln at 1300°C. A gas chromatograph analysis device was installed at the lance insertion position in the rotary kiln and at a part of a gas exhaust system, and the H₂ concentration and the CH₄ concentration at the lance insertion position inside the treatment apparatus and the CO concentration and the CO₂ concentration in a gas discharged to the outside of the treatment apparatus were measured.

After the predetermined time had elapsed, the manganese ore specimen was removed from the treatment apparatus and cooled in the air. The oxygen concentration and the carbon concentration in the specimen were analyzed by a combustion method, and the concentrations of elements other than oxygen and carbon in the specimen were analyzed by a fluorescent X-ray analysis method, to evaluate the reduced state of the specimen. The reduction-carburization treatment conditions of the manganese ore and the reduction ratio of the manganese ore are shown in Table 4-2. Here, the reduction ratio of the manganese ore in Table 4-2 represents, as a percentage, the ratio of the difference between the oxygen concentration of the manganese oxides in the manganese ore before the reduction-carburization treatment and the oxygen concentration of the manganese oxides in the manganese compound after the reduction-carburization treatment to the oxygen concentration of the manganese oxides in the manganese ore before the reduction-carburization treatment. The oxygen concentration of the manganese oxides in the manganese ore is a difference between an analysis value of the oxygen concentration in the entire manganese ore specimen and a total calculated value of the oxygen concentrations of oxides other than manganese in the manganese ore. "Y_{Mn}" in Table 4-2 represents the total manganese yield, and represents the percentage obtained by dividing the product of the weight of the manganese ore specimen after the reduction-carburization treatment and the total manganese concentration by the product of the weight of the manganese ore specimen before the reduction-carburization treatment and the total manganese concentration. The CO₂ concentration in the exhaust gas in Table 4-2 is a total of an average value of CO₂ concentrations measured during the reduction-carburization treatment and an average value of values obtained by converting the CO concentration measured during the reduction-carburization treatment into a CO₂ concentration. In Table 4-1, among the columns of "Reducing gas flow rate", "H₂" represents the hydrogen gas flow rate, and "CH₄" represents the hydrocarbon gas flow rate. Among the columns of "Gas composition at lance insertion position", "H₂" represents the hydrogen gas concentration; "CH₄" represents the hydrocarbon gas concentration; "P_{CH4}" represents the partial pressure of the hydrocarbon gas; and "H/C" represents the ratio of the number of hydrogen atoms in the mixed gas to that of carbon atoms. Among the columns of "Mn compound composition before treatment" and "Mn compound composition after treatment" in Table 4-2, "T. Mn" represents the total manganese concentration; "O" represents the oxygen concentration; and "C" represents the carbon concentration. "Tg" represents the temperature at the position where the reducing gas or the Ar gas is supplied; "Tr" represents the maximum temperature in the reduction-carburization treatment; and "tr" represents the treatment time of the reduction-carburization treatment. Further, "d" represents the particle diameter of the manganese ore specimen.

**[Table 4-1]**

| No. | Type of reductant | d | Treatment apparatus | Reducing gas flow rate | | Gas composition at lance position | | | | Tg | Tr | tr |
|---|---|---|---|---|---|---|---|---|---|---|---|---|
| | | | | H₂ | CH₄ | H₂ | CH₄ | P_{CH4} | H/C | | | |
| | | mm | | NL/min | NL/min | Vol% | Vol% | kPa | - | °C | °C | min |
| 21 | H₂, CH₄ | 3 | Rotary kiln | 1840 | 160 | 86.2 | 8.0 | 8.1 | 20 | 650 | 750 | 90 |
| 22 | H₂, CH₄ | 10 | Rotary kiln | 1840 | 160 | 86.2 | 8.0 | 8.1 | 20 | 650 | 750 | 90 |
| 23 | H₂, CH₄ | 80 | Rotary kiln | 1840 | 160 | 86.2 | 8.0 | 8.1 | 20 | 650 | 750 | 90 |
| 24 | H₂, CH₄ | 100 | Rotary kiln | 1840 | 160 | 86.2 | 8.0 | 8.1 | 20 | 650 | 750 | 90 |
| 25 | H₂, CH₄ | 10 | Rotary kiln | 1840 | 160 | 86.2 | 8.0 | 8.1 | 20 | 700 | 750 | 90 |
| 26 | H₂, CH₄ | 10 | Rotary kiln | 1840 | 160 | 86.2 | 8.0 | 8.1 | 20 | 750 | 750 | 90 |
| 27 | H₂, CH₄ | 10 | Rotary kiln | 1800 | 200 | 84.3 | 9.9 | 10.0 | 18 | 650 | 750 | 90 |
| 28 | H₂, CH₄ | 10 | Rotary kiln | 1600 | 400 | 75.0 | 19.3 | 19.5 | 11 | 650 | 750 | 90 |
| 29 | H₂, CH₄ | 10 | Rotary kiln | 1840 | 160 | 86.2 | 8.0 | 8.1 | 20 | 650 | 800 | 90 |
| 30 | H₂, CH₄ | 10 | Rotary kiln | 1840 | 160 | 86.2 | 8.0 | 8.1 | 20 | 650 | 900 | 90 |
| 31 | H₂, CH₄ | 10 | Rotary kiln | 1840 | 160 | 86.2 | 8.0 | 8.1 | 20 | 650 | 1200 | 90 |
| 32 | H₂ | 10 | Rotary kiln | 2000 | 0 | 93.7 | 0.6 | 0.6 | 69 | 650 | 750 | 90 |
| 33 | CH₄ | 10 | Rotary kiln | 0 | 2000 | 0.6 | 94.0 | 95.3 | 4 | 650 | 750 | 90 |
| 34 | Coke | 10 | Rotary kiln | 0 | 0 | 0.0 | 0.6 | 0.6 | 3 | 650 | 750 | 90 |
| 35 | H₂, CH₄ | 1 | Rotary kiln | 1840 | 160 | 86.2 | 8.0 | 8.1 | 20 | 650 | 750 | 90 |
| 36 | H₂, CH₄ | 120 | Rotary kiln | 1840 | 160 | 86.2 | 8.0 | 8.1 | 20 | 650 | 750 | 90 |
| 37 | H₂, CH₄ | 10 | Rotary kiln | 1840 | 160 | 86.2 | 8.0 | 8.1 | 20 | 650 | 1300 | 90 |

**[Table 4-2]**

| No. | Mn compound composition before treatment | | | Mn compound composition after treatment | | | Y_{Mn} | Reduction ratio | Melting of specimen | CO₂ concentration in exhaust gas | Remarks |
|---|---|---|---|---|---|---|---|---|---|---|---|
| | T.Mn | O | C | T.Mn | O | C | | | | | |
| | Mass% | Mass% | Mass% | Mass% | Mass% | Mass% | % | % | - | Vol% | |
| 21 | 53.6 | 25.0 | 0.1 | 71.1 | 4.4 | 6.3 | 98 | 86.8 | Not melted | 6.2 | Inventive Example |
| 22 | 52.0 | 24.2 | 0.1 | 68.1 | 4.6 | 5.9 | 97 | 85.6 | Not melted | 6.0 | Inventive Example |
| 23 | 50.3 | 23.4 | 0.1 | 64.6 | 5.6 | 4.4 | 96 | 81.2 | Not melted | 5.7 | Inventive Example |
| 24 | 53.8 | 25.0 | 0.1 | 70.2 | 6.3 | 4.1 | 95 | 80.8 | Not melted | 5.9 | Inventive Example |
| 25 | 54.7 | 25.5 | 0.1 | 73.3 | 4.0 | 6.3 | 96 | 88.2 | Not melted | 6.5 | Inventive Example |
| 26 | 52.5 | 24.4 | 0.1 | 69.4 | 3.7 | 6.3 | 95 | 88.5 | Not melted | 6.2 | Inventive Example |
| 27 | 53.9 | 25.1 | 0.1 | 72.1 | 3.5 | 6.8 | 98 | 89.6 | Not melted | 6.3 | Inventive Example |
| 28 | 51.3 | 23.9 | 0.1 | 67.4 | 3.7 | 6.6 | 96 | 88.3 | Not melted | 6.7 | Inventive Example |
| 29 | 50.9 | 23.7 | 0.1 | 66.5 | 3.9 | 6.6 | 98 | 87.3 | Not melted | 6.0 | Inventive Example |
| 30 | 54.6 | 25.5 | 0.1 | 73.5 | 3.4 | 6.9 | 96 | 90.2 | Not melted | 6.4 | Inventive Example |
| 31 | 51.3 | 23.9 | 0.1 | 68.2 | 2.0 | 7.2 | 96 | 93.7 | Not melted | 6.3 | Inventive Example |
| 32 | 51.5 | 24.0 | 0.1 | 59.9 | 17.5 | 0.1 | 99 | 37.4 | Not melted | 2.0 | Comparative Example |
| 33 | 52.3 | 24.4 | 0.1 | 64.2 | 12.3 | 1.5 | 95 | 59.0 | Not melted | 14.2 | Comparative Example |
| 34 | 53.4 | 24.9 | 0.1 | 63.3 | 17.2 | 2.3 | 98 | 41.8 | Not melted | 50.2 | Comparative Example |
| 35 | 53.4 | 24.9 | 0.1 | 70.8 | 4.0 | 6.3 | 86 | 87.9 | Not melted | 6.2 | Inventive Example |
| 36 | 53.9 | 25.1 | 0.1 | 69.2 | 8.3 | 3.9 | 98 | 74.1 | Not melted | 5.6 | Inventive Example |
| 37 | 52.8 | 24.6 | 0.1 | 66.3 | 10.0 | 4.2 | 98 | 67.5 | Melted | 5.3 | Comparative Example |

It was confirmed from the results shown in Table 4-1 and Table 4-2 that, in treatment Nos. 21 to 31, in which the reduction-carburization treatment of the manganese ore was performed by the method according to the present invention, manganese carbide with a reduction ratio of the manganese ore of 80% or higher could be obtained. In contrast, it was confirmed that, in the case of the reduction treatment using only hydrogen gas (treatment No. 32) or the reduction-carburization treatment using only hydrocarbon gas (treatment No. 33) or coke (treatment No. 34), the reduction ratio of the manganese ore was lower than 60%. It was further found that, in treatment Nos. 21 to 31, the CO₂ concentrations in the exhaust gas in the reduction-carburization treatment were at lower levels than those in treatment Nos. 33 and 34. While the reduction ratio of the manganese ore increases as the particle diameter of the manganese ore becomes smaller, it was found that, in the case of the reduction-carburization treatment using manganese ore with a particle diameter of 1 mm (treatment No. 35), the total manganese yield decreased to 86%. In contrast, it was found that, in the case of the reduction-carburization treatment using manganese ore with a particle diameter of 120 mm (treatment No. 36), the reduction ratio of the manganese ore decreased to less than 75%. Further, in treatment No. 38, in which the maximum temperature inside the rotary kiln was maintained at 1300°C, it was observed that the manganese ore specimen was partially melted during the reduction-carburization treatment. Thus, it was confirmed that, in treatment No. 38, the reduction ratio of the manganese ore was at a lower level than those in treatment Nos. 21 to 31. This is presumably due to the reduced gas permeability.

It was demonstrated from the results shown in Table 4-1 and Table 4-2 that, under the conditions where the particle diameter of the manganese ore specimen was 10 mm and the maximum temperature inside the rotary kiln was 750°C, treatment Nos. 25 and 26 had higher reduction ratios of the manganese ore than that in treatment No. 22. In treatment Nos. 25 and 26, the mixed gas was supplied to a position where the temperature inside the rotary kiln was 700°C or higher.

Treatment Nos. 22, 27, and 28 were compared in which, as shown in Table 4-1 and Table 4-2, the conditions were the same with the temperature at the lance insertion position being 650°C, the particle diameter of the manganese ore specimen being 10 mm, and the maximum temperature inside the rotary kiln being 750°C. It was confirmed that, in treatment No. 27, the reduction ratio of the manganese ore was 89% or higher and increased compared to those in treatment Nos. 22 and 28. In treatment No. 27, the partial pressure of the hydrocarbon gas in the mixed gas was 10.0 kPa or higher and the number of hydrogen atoms in the mixed gas was at least 12 times that of carbon atoms. It was also confirmed that, compared with treatment Nos. 22 and 27, in treatment No. 28, the ratio of the number of hydrogen atoms in the mixed gas to that of carbon atoms was sufficiently low to increase the CO₂ concentration in the exhaust gas.

Treatment Nos. 22 and 29 to 31 were compared, in which, as shown in Table 4-1 and Table 4-2, the temperature at the lance insertion position was 650°C, the particle diameter of the manganese ore specimen was 10 mm, and the partial pressure of hydrocarbon was the same. It was found that, in treatment Nos. 22 and 29 to 31, the higher the maximum temperature inside the rotary kiln was, the higher the reduction ratio of the manganese ore became, with the reduction ratio reaching 87% or more at temperatures of 800°C or higher.

### <Example 4>

An example is described in which manganese-containing molten steel was produced in a 50 kg-scale induction melting furnace using manganese carbide obtained in accordance with the specifications of treatment Nos. 21 to 31 of Example 3. After 50 kg of high-purity electrolytic iron was charged into the induction melting furnace, the high-purity electrolytic iron inside the induction melting furnace was melted by adjusting the output of the induction melting furnace. With the temperature of the molten steel inside the induction melting furnace kept at 1600 to 1620°C, manganese carbide obtained in accordance with the specifications of treatment Nos. 21 to 31 of Example 3 was added to the molten steel to produce manganese-containing molten steel. As a reference example, high-carbon ferromanganese was added (treatment No. 38) to produce manganese-containing molten steel. Here, the amounts of manganese carbide and high-carbon ferromanganese to be added were determined such that the Mn concentration in the molten steel became 1.00 mass%. The compositions of manganese carbide and high-carbon ferromanganese are shown in Table 5. Further, the compositions of molten steel before and after the addition of manganese carbide or high-carbon ferromanganese are shown in Table 5.

Approximately three minutes after adding the manganese carbide or the high-carbon ferromanganese to the molten steel, the molten steel was sampled from the induction melting furnace and water-cooled to produce a steel specimen. The carbon concentration in the specimen was analyzed using a combustion method, and the concentrations of elements other than carbon were analyzed using an ICP emission spectrometric analysis method to examine the composition of the specimen.

**[Table 5]**

| No. | Name of additive | Composition of additive [mass%] | | | | | Amount of Mn compound added[kg] | Molten steel composition before addition [mass%] | | | | Molten steel composition after addition [mass%] | | | | Remarks |
|---|---|---|---|---|---|---|---|---|---|---|---|---|---|---|---|---|
| | | T.Mn | T.Fe | C | Si | T.Al | | Mn | C | Si | sol.Al | Mn | C | Si | sol.Al | |
| 21 | Manganese carbide | 71.1 | 5.3 | 3.8 | 2.32 | 4.21 | 0.75 | 0.02 | 0.002 | <0.01 | <0.01 | 0.91 | 0.057 | <0.01 | <0.01 | Inventive Example |
| 22 | Manganese carbide | 68.1 | 7.0 | 5.0 | 1.99 | 4.21 | 0.75 | 0.02 | 0.001 | <0.01 | <0.01 | 0.91 | 0.060 | <0.01 | <0.01 | Inventive Example |
| 23 | Manganese carbide | 64.6 | 6.3 | 5.6 | 2.22 | 3.80 | 0.75 | 0.01 | 0.002 | <0.01 | <0.01 | 0.98 | 0.068 | <0.01 | <0.01 | Inventive Example |
| 24 | Manganese carbide | 70.2 | 6.2 | 6.1 | 2.04 | 4.50 | 0.75 | 0.01 | 0.003 | <0.01 | <0.01 | 0.95 | 0.089 | <0.01 | <0.01 | Inventive Example |
| 25 | Manganese carbide | 73.3 | 6.4 | 7.0 | 1.95 | 4.18 | 0.70 | 0.01 | 0.001 | <0.01 | <0.01 | 0.92 | 0.087 | <0.01 | <0.01 | Inventive Example |
| 26 | Manganese carbide | 69.4 | 5.4 | 6.4 | 1.89 | 3.64 | 0.70 | 0.02 | 0.001 | <0.01 | <0.01 | 0.92 | 0.087 | <0.01 | <0.01 | Inventive Example |
| 27 | Manganese carbide | 72.1 | 6.6 | 5.9 | 1.96 | 3.46 | 0.70 | 0.01 | 0.003 | <0.01 | <0.01 | 0.95 | 0.071 | <0.01 | <0.01 | Inventive Example |
| 28 | Manganese carbide | 67.4 | 5.2 | 5.2 | 2.15 | 3.99 | 0.70 | 0.02 | 0.003 | <0.01 | <0.01 | 0.90 | 0.060 | <0.01 | <0.01 | Inventive Example |
| 29 | Manganese carbide | 66.5 | 6.4 | 4.5 | 1.92 | 4.10 | 0.70 | 0.01 | 0.002 | <0.01 | <0.01 | 0.96 | 0.055 | <0.01 | <0.01 | Inventive Example |
| 30 | Manganese carbide | 73.5 | 6.7 | 6.2 | 2.14 | 4.43 | 0.70 | 0.01 | 0.003 | <0.01 | <0.01 | 0.98 | 0.087 | <0.01 | <0.01 | Inventive Example |
| 31 | Manganese carbide | 68.2 | 6.1 | 6.3 | 1.89 | 4.46 | 0.70 | 0.01 | 0.001 | <0.01 | <0.01 | 0.93 | 0.077 | <0.01 | <0.01 | Inventive Example |
| 38 | HC-FeMn * | 74.4 | 16.9 | 7.0 | 0.13 | <0.01 | 0.70 | 0.02 | 0.002 | <0.01 | <0.01 | 0.97 | 0.091 | <0.01 | <0.01 | Reference Example |

| | | | | | | | | | | | | | | | | |
|---|---|---|---|---|---|---|---|---|---|---|---|---|---|---|---|---|
| *: High-carbon ferromanganese | | | | | | | | | | | | | | | | |

It was demonstrated from the result shown in Table 5 that, in treatment Nos. 21 to 31, in which the reduction-carburization treatment of the manganese ore was performed using the method of the present invention to produce manganese-containing molten steel using the manganese carbide thus obtained, the molten steel had an Mn concentration of 0.90 to 0.99 mass% and a C concentration of 0.047 to 0.095 mass%. It was found that the molten steel had an Si concentration and a sol. Al concentration both below 0.01 mass%, and that Si and Al contained in the manganese carbide were separated and removed as slag without being picked up into the molten steel. In contrast, in treatment No. 38, in which manganese-containing molten steel was produced using high-carbon ferromanganese, the molten steel had an Mn concentration of 0.97 mass%, a C concentration of 0.091 mass%, and an Si concentration and a sol. Al concentration both lower than 0.01 mass%. Thus, it was confirmed that the composition was equivalent to the composition of the manganese-containing molten steel produced by the method according to the present invention.

### Industrial Applicability

The technology disclosed in the present invention can easily produce manganese carbide and is also applicable to the production of high-carbon ferromanganese.

## Claims

1. A method for producing manganese carbide,
**characterized in that**
a reduction-carburization treatment of manganese ore is performed by heating the manganese ore to a treatment temperature at which the manganese ore remains in an unmelted state and by bringing the manganese ore into contact with a mixed gas of hydrogen gas and hydrocarbon gas under atmospheric pressure.

2. The method for producing manganese carbide according to claim 1, wherein
the partial pressure of the hydrocarbon gas in the mixed gas is set to 10.0 kPa or higher, and the number of hydrogen atoms in the mixed gas is set to be at least 12 times that of carbon atoms.

3. The method for producing manganese carbide according to claim 1 or 2, wherein
the treatment temperature is set to be within a range of 800°C or higher and lower than a melting temperature Tₘ.

4. The method for producing manganese carbide according to any one of claims 1 to 3, wherein
the particle diameter of the manganese ore is adjusted to 3 mm or larger and 100 mm or smaller in advance.

5. The method for producing manganese carbide according to claim 4, wherein
the reduction-carburization treatment is performed in a rotary kiln.

6. The method for producing manganese carbide according to claim 5, wherein
the mixed gas is supplied at a position where the temperature inside the rotary kiln is 700°C or higher.

7. The method for producing manganese carbide according to claim 6, wherein,
at the position where the mixed gas is supplied, the partial pressure of the hydrocarbon gas in the mixed gas is set to 10.0 kPa or higher, and the number of hydrogen atoms in the mixed gas is set to be at least 12 times that of carbon atoms.

8. The method for producing manganese carbide according to any one of claims 5 to 7, wherein
a maximum temperature inside the rotary kiln is set to be within a range of 800°C or higher and lower than a melting temperature Tₘ.

9. A method for producing manganese-containing steel,
**characterized in that**
the method comprises a step of adding manganese carbide produced by the production method according to any one of claims 1 to 8 to molten steel.
